# EUROPÄISCHE PATENTSCHRIFT

(11) **EP 2 470 411 B1**
(45) Veröffentlichungstag und Bekanntmachung des Hinweises auf die Patenterteilung: **14.08.2013**
(21) Anmeldenummer: 10750091.0
(22) Anmeldetag: 26.08.2010
(51) Int. Cl.: B62D 25/04, B62D 35/00, B62D 37/02

(54) **KRAFTFAHRZEUG MIT EINER WINDSCHUTZSCHEIBE UND KAROSSERIESÄULEN**
MOTOR VEHICLE HAVING A WINDSCREEN AND BODY PILLARS
VEHICULE A MOTEUR DOTE D'UN PARE-BRISE ET DE MONTANTS AVANT

(30) Priorität: 28.08.2009 DE 102009039037
(43) Veröffentlichungstag der Anmeldung: 04.07.2012
(73) Patentinhaber: Bayerische Motoren Werke Aktiengesellschaft, 80809 München (DE)
(72) Erfinder: DIMITRIOU, Ioannis, 85417 Marzling (DE); WINKELMANN, Holger, 85301 Guentersdorf (DE)
(74) Vertreter: Schernhammer, Herbert
(86) Internationale Anmeldenummer: PCT/EP2010/062458
(87) Internationale Veröffentlichungsnummer: WO 2011/023752

(56) Entgegenhaltungen:
- EP-A1- 1 544 089
- JP-U- 62 065 370
- JP-U- 62 106 881

## Beschreibung

Die Erfindung betrifft ein Kraftfahrzeug mit einer Windschutzscheibe, an deren seitlichen Endabschnitten Karosseriesäulen vorgesehen sind.

Derartige Kraftfahrzeuge sind allgemein bekannt und weisen mehrere Karosseriesäulen auf, die das so genannte "Greenhouse" bilden, also den Bereich der Fahrgastzelle oberhalb der Brüstungslinie. Bei Fahrt entstehen an den bekannten Kraftfahrzeugen durch die Umlenkung der Strömung Strömungsablösungen im Bereich der vorderen Karosseriesäulen, nachfolgend auch als A-Säulen bezeichnet. Das hieraus resultierende Ablösegebiet, auch "A-Säulen-Wirbei" genannt, hat je nach Neigung und/oder Bombierung der Windschutzscheibe eine unterschiedlich starke Ausprägung. Das Ablösegebiet ist umso größer, je steiler die Windschutzscheibe in Bezug auf eine horizontale Ebene steht und/oder je geringer die Windschutzscheibe bombiert ist. Das Ablösegebiet verursacht Verwirbelungen mit einem hohen Unterdruck im Wirbelkem und damit beträchtliche Strömungsverluste im Bereich des Greenhouses, die zu einer Erhöhung des c_{w}-Wertes des Kraftfahrzeugs und des Hinterachsauftriebs führen. Die Verwirbelungen treten vor allem im unteren und mittleren Bereich der A-Säule auf, also in dem Bereich, in dem üblicherweise ein Außenrückspiegel angebracht ist.

Aufgabe der Erfindung ist es, die aerodynamischen Eigenschaften gattungsgemäßer Kraftfahrzeuge zu verbessern.

Diese Aufgabe wird durch ein Kraftfahrzeug mit den Merkmalen des Anspruchs 1 gelöst.

Kemgedanke der Erfindung ist es, eine "Durchströmung" wenigstens eines seitlichen Endabschnitts der Windschutzscheibe des Kraftfahrzeugs zu ermöglichen, indem zwischen der Windschutzscheibe und der Karosseriesäule eine Öffnung vorgesehen ist. Durch diese Öffnung wird die sich bei Fahrt des Kraftfahrzeugs einstellende Strömung ("Fahrtwind") kanalisiert. Damit wird die Strömung in definierter Weise in eine sich eng an das Greenhouse anlegende Umströmung zurückgeführt. Das Durchströmen der Öffnung an der A-Säule führt somit zu einer Reduzierung des Ablösegebiets im Seitenbereich des Kraftfahrzeugs. Hierdurch werden die Verwirbelungen im Bereich der A-Säule abgeschwächt, wodurch der c_{w}-Wert des Kraftfahrzeugs reduziert und der Hinterachsauftrieb minimiert wird. Außerdem wird die Umströmung eines im Bereich der A-Säule angeordneten Außenrückspiegels verbessert.

Zwar ist es allgemein bekannt, die ein Kraftfahrzeug umströmende Luft zwischen den seitlichen Endabschnitten der Heckscheibe und der hinteren Karosseriesäule, auch "C-Säule" genannt, zu führen. Dies ist beispielsweise beim Fahrzeug Ferrari 599 GTB und dem Konzeptfahrzeug Ford losis Max realisiert. Bei den bekannten Kraftfahrzeugen wirkt die C-Säule jedoch lediglich als Luftleitelement, das die Strömung in Richtung der Heckscheibe und/oder der Heckklappe bzw. des Kofferraumdeckels führt, um ein möglichst langes Anliegen der Strömung im Heckbereich des Kraftfahrzeugs zu erreichen und damit die Größe des Totwassergebietes im Bereich der Heckscheibe zu reduzieren. Somit können die bekannten Kraftfahrzeuge keinen Hinweis auf die erfindungsgemäße Lösung geben.

Die Öffnung ist vergleichsweise schmal und langgestreckt entlang des Verlaufs der A-Säule, also in Form eines Schlitzes oder Spaltes ausgebildet. Bevorzugt ist sowohl am rechten als auch am linken Endabschnitt der Windschutzscheibe jeweils eine Öffnung vorgesehen. Selbstverständlich ist es jedoch auch möglich, nur an einer Fahrzeugseite eine Öffnung vorzusehen.

Die Größe der Öffnung kann entlang der Höhenerstreckung der A-Säule gleichbleibend sein. Bevorzugt verringert sich die Breite der Öffnung nach oben hin, so dass ein Durchlass für die strömende Luft nach Art eines sich nach oben verengenden Kanals geschaffen ist. Selbstverständlich kann die Breite der Öffnung entlang des Verlaufs der A-Säule auch anderweitig variieren.

Die Öffnung beginnt vorzugsweise am unteren Ende der A-Säule, an der so genannten A-Säulen-Wurzel und reicht bevorzugt nach oben bis etwa zur Mitte der Höhenerstreckung der A-Säule, da sich in diesem Bereich eine besonders starke Verwirbelung der umströmenden Luft ergibt. Die Öffnung kann sich jedoch auch weiter nach oben erstrecken.

Bevorzugt erstreckt sich die kanalförmige Öffnung durchgehend von der A-Säulen-Wurzel nach oben. Selbstverständlich kann der Durchtritt für die Strömungsluft auch zwei oder mehrere aneinandergrenzende Öffnungen realisiert sein, indem ein oder mehrere Querstege zwischen dem seitlichen Endabschnitt und der A-Säule vorgesehen sind, beispielsweise zur Erhöhung der Steifigkeit der A-Säule. Die Querstege können beispielsweise mit der Windschutzscheibe verklebt oder über Durchgangsbohrungen in der Windschutzscheibe mit dieser verschraubt sein.

Bevorzugt ist die A-Säule als Tragflügelprofil ausgebildet. Bei Tragflügelprofilen bildet sich an der Vorderkante ein Unterdruckgebiet ("Saugspüze") aus, das eine entgegen der Fahrtrichtung gerichtete Kraft erzeugt und damit den Luftwiderstand des Kraftfahrzeugs insgesamt reduziert.

Die A-Säule ist bevorzugt als Hohlkörper mit einem geschlossenen Querschnitt ausgebildet. Insbesondere, jedoch nicht ausschließlich bei solchen A-Säulen, die keine tragende Funktion haben (siehe unten stehende Erläuterung), kann sich auch ein offenes Profil an die Windschutzscheibe anschließen.

Die Querschnittsform und/oder die Größe der Querschnittsfläche der A-Säule kann/können entlang des Verlaufs der A-Säule gleichbleibend sein oder entlang der A-Säule variieren. Bei einem tragflügelartigen Querschnitt der A-Säule kann der Winkel, unter dem die Sehne des Tragflügelprofils gegenüber der Querrichtung des Kraftfahrzeugs und/oder einer horizontalen Ebene angestellt ist, entlang der Höhenerstreckung der A-Säule gleichbleibend sein oder variieren. Bei sich änderndem Winkel wird eine in sich verdrehte A-Säule erreicht.

Durch die geometrische Gestaltung der A-Säule kann eine Anpassung an die jeweilige Strömungstopologie des betreffenden Kraftfahrzeugs erfolgen. Die geometrische Auslegung erfolgt auf der Grundlage von Messungen (Windkanal, Fahrversuch) oder numerischer Stimulation.

In Zusammenhang mit der vorliegenden Erfindung wird unter dem Begriff "A-Säule" jede Einrichtung verstanden, die sich an die seitlichen Endabschnitte der Windschutzscheibe anschließt. Damit sind auch solche Elemente von der Erfindung umfasst, die keine Tragfunktion haben. Derartige Elemente sind beispielsweise als Verkleidungsteile mit strömungsleitenden Eigenschaften ("Layer") ausgebildet. Da sie keine tragende Funktion haben, ist es nicht erforderlich, dass sie an den Bereich der Frontklappe oder an das Dach des Kraftfahrzeugs angebunden sind. Selbstverständlich muss bei einem Kraftfahrzeug mit derartigen nicht tragenden Elementen ein anderes tragendes Element vorgesehen sein. Dieses ersatzweise vorzusehende tragende Element kann beispielsweise von einem so genannten "Käfig" gebildet werden, wie er zum Beispiel aus dem Tourenwagensport bekannt ist. Ein Bestandteil dieses Käfigs ist hinter der Windschutzscheibe angeordnet und mit dem Boden der Kraftfahrzeugkarosserie fest verbunden. Damit trägt die Windschutzscheibe ausschließlich die durch den Fahrtwind entstehenden Kräfte, wozu die Windschutzscheibe gegebenenfalls entsprechend in ihrer Formgebung und Materialstärke zu verändern ist. Alternativ können die ersatzweise tragenden Elemente zum Beispiel auch in Form einer von den seitlichen Endabschnitten der Windschutzscheibe überdeckten Säule gebildet werden, die von außerhalb des Kraftfahrzeugs nicht oder nicht auf den ersten Blick wahrgenommen wird.

Vorteilhafte Ausgestaltungen sind Gegenstand der Unteransprüche.

Ein mögliches Ausführungsbeispiel der Erfindung ist in der Zeichnung dargestellt und wird nachfolgend näher erläutert. Es zeigt:
- Figur 1: eine Vorderansicht auf ein erfindungsgemäßes Kraftfahrzeug,
- Figur 2: eine perspektivische Darstellung eines Ausschnitts des Kraftfahrzeugs von Fig. 1 und
- Fig. 3: eine vergrößerte Darstellung des Bereichs der A-Säule des Kraftfahrzeugs von Fig. 1.

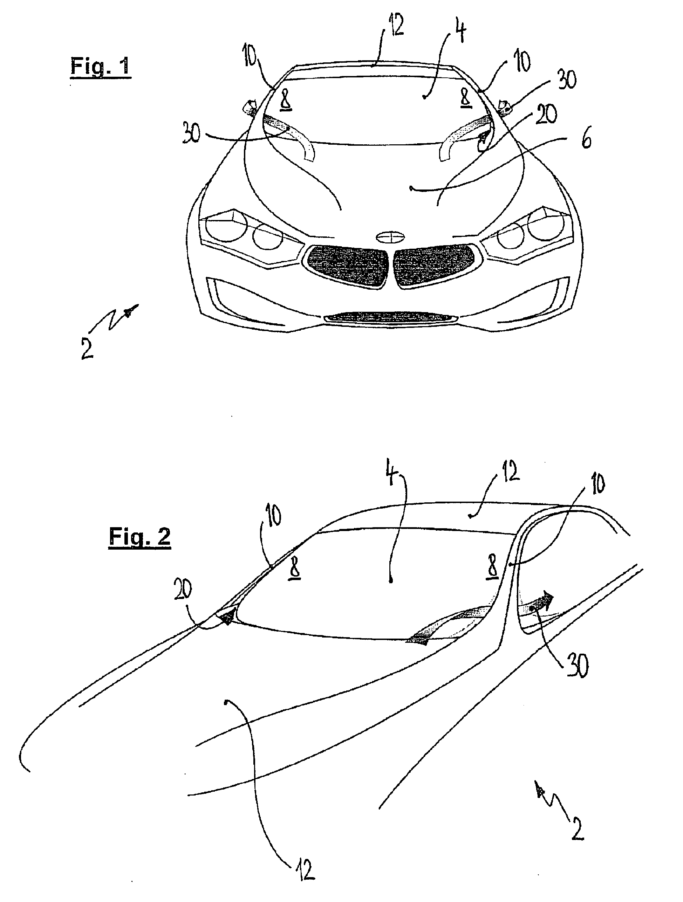

Die Figuren 1 bis 3 zeigen ein in seiner Gesamtheit mit 2 bezeichnetes Kraftfahrzeug mit einer Windschutzscheibe 4, die sich an eine Frontklappe 6 anschließt und sich über nahezu die gesamte Breite des Kraftfahrzeugs 2 erstreckt. Benachbart zum linken und rechten seitlichen Endabschnitt 8 der Windschutzscheibe 4 befindet sich jeweils eine A-Säule 10. Oberhalb der Windschutzscheibe 4 schließt sich ein Dach 12 an.

Erfindungsgemäß ist zwischen den seitlichen Endabschnitten 8 der Windschutzscheibe 4 und den A-Säulen 10 eine Öffnung 20 vorgesehen. Die Öffnung 20 ist als schlitzförmiger Spalt ausgebildet, der vom unteren Ende der A-Säule 10 bis etwa zur Hälfte der Höhenerstreckung der A-Säule 10 reicht.

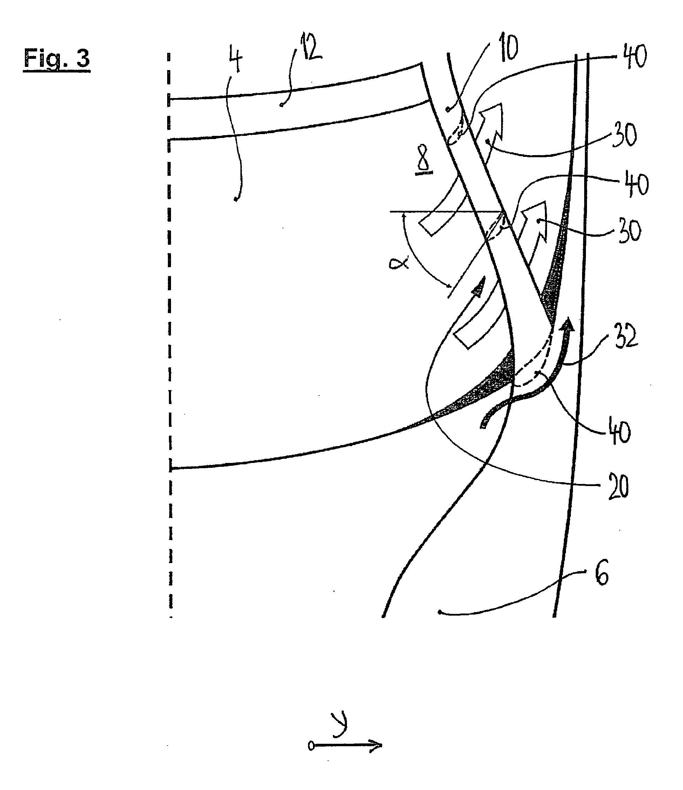

Die Öffnung 20 ermöglicht den Durchtritt von Luft während der Fahrt des Kraftfahrzeugs 2. Die durch die Öffnungen 20 hindurch strömende Luft ist mit Pfeilen 30 symbolisiert. Der die A-Säule 10 außenseitig umströmende Anteil der Luft ist in Fig. 3 mit dem Pfeil 32 bezeichnet.

In Fig. 3 ist der Querschnitt 40 der A-Säule 10 mit gestrichelten Linien dargestellt. Wie ohne Weiteres erkennbar ist, verändert sich die Größe des Querschnitts 40 entlang der Höhenerstreckung der A-Säule 10. Abweichend vom dargestellten Ausführungsbeispiel kann die Form und die Ausrichtung des Querschnitts 40 entlang der A-Säule 10 variieren. Die Ausrichtung des Querschnitts 40 ist durch die Sehne 42 des Tragflügelprofils wiedergegeben (Winkel α zu Fahrzeug-Querrichtung Y). Daneben kann auch der Winkel der Sehne 42 zu einer horizontalen Ebene entlang der A-Säule 10 variieren.

Zusammenfassend lässt sich die Erfindung wie folgt beschreiben: Bei einem erfindungsgemäßen Kraftfahrzeug 2 ist zwischen den seitlichen Endabschnitten 8 der Windschutzscheibe 4 und den benachbarten A-Säulen 10 eine spaltförmige Öffnung 20 vorgesehen, durch die bei Fahrt des Kraftfahrzeugs 2 Luft 30 strömt. Hierdurch wird die Ausbildung verlustreicher Wirbel im Seitenbereich des Kraftfahrzeugs 2 reduziert.

## Patentansprüche

1. Kraftfahrzeug mit einer Windschutzscheibe, an deren seitlichen Endabschnitten Karosseriesäulen vorgesehen sind,
**dadurch gekennzeichnet, dass** zwischen wenigstens einem seitlichen Endabschnitt (8) der Windschutzscheibe (4) und der benachbarten Karosseriesäule (10) eine langgestreckte Öffnung (20) vorgesehen ist, durch die bei Fahrt des Kraftfahrzeugs (2) Luft (30) strömen kann.

2. Kraftfahrzeug nach Anspruch 1,
**dadurch gekennzeichnet, dass** die Öffnung (20) vom unteren Ende der Karosseriesäule (10) bis etwa zur Hälfte der Höhenerstreckung der Karosseriesäule (10) reicht.

3. Kraftfahrzeug nach Anspruch 1 oder 2,
**dadurch gekennzeichnet, dass** die Karosseriesäule (10) einen Querschnitt (40) nach Art eines Tragflügelprofils hat.

4. Kraftfahrzeug nach einem der vorangegangenen Ansprüche,
**dadurch gekennzeichnet, dass** der Querschnitt (40) der Karosseriesäule (10) entlang ihrer Höhenerstreckung variiert.

5. Kraftfahrzeug nach Anspruch 3 oder 4,
**dadurch gekennzeichnet, dass** der Winkel (α), unter dem die Sehne (42) des Tragflügelprofils gegenüber der Querrichtung (Y) des Kraftfahrzeugs (2) und/oder einer horizontalen Ebene angestellt ist, entlang der Höhenerstreckung der Karosseriesäule (10) variiert.

## Claims

1. A motor vehicle with a windscreen having side end portions at which car-body pillars are provided,
**characterised in that** an elongate opening (20) through which air (30) can flow when the vehicle (2) is in motion is provided between the neighbouring pillar (10) and at least one lateral end portion (8) of the windscreen (4).

2. A vehicle according to claim 1,
**characterised in that** the opening (20) extends from the bottom end of the pillar (10) to about halfway up the pillar (10).

3. A vehicle according to 1 or claim 2,
**characterised in that** the pillar (10) has a cross-section (40) like an aerofoil profile.

4. A vehicle according to any of the preceding claims,
**characterised in that** the cross-section (40) of the pillar (10) varies along its height.

5. A vehicle according to claim 3 or claim 4,
**characterised in that** the angle (α) of the chord (42) of the aerofoil profile to the transverse direction (Y) of the vehicle (2) and/or to a horizontal plane varies along the height of the pillar (10).

## Revendications

1. Véhicule automobile équipé d'un pare-brise sur les tronçons d'extrémité latéraux duquel sont montées des colonnettes de carrosserie,
**caractérisé en ce qu'**
entre au moins un tronçon d'extrémité latéral (8) du pare-brise (4) et la colonnette de carrosserie (10) voisine il est prévu une ouverture longitudinale (20) par laquelle de l'air peut s'écouler pendant le déplacement du véhicule (2).

2. Véhicule conforme à la revendication 1,
**caractérisé en ce que**
l'ouverture (20) s'étend de l'extrémité inférieure de la colonnette de carrosserie (10) jusqu'à atteindre environ la moitié de l'étendue en hauteur de cette colonnette de carrosserie (10).

3. Véhicule conforme à la revendication 1 ou 2,
**caractérisé en ce que**
la colonnette de carrosserie (10) a une section (40) en forme de profil d'aile portante.

4. Véhicule conforme à l'une des revendications précédentes,
**caractérisé en ce que**
la section (40) la colonnette de carrosserie (10) varie le long de son étendue en hauteur.

5. Véhicule conforme à la revendication 3 ou 4,
**caractérisé en ce que**
l'angle (α) sous lequel la corde (42) du profilé d'aile portante est réglée par rapport à la direction transversale (Y) du véhicule (2) et/ou un plan horizontal varie le long de l'étendue en hauteur de la colonnette de carrosserie (10).
